# FASCICULE DE BREVET EUROPEEN

(11) **EP 0 533 565 B1**
(45) Date de publication et mention de la délivrance du brevet: **12.03.1997**
(21) Numéro de dépôt: 92402538.0
(22) Date de dépôt: 16.09.1992
(51) Int. Cl.: H01H 25/04, H01H 21/84, B60Q 1/14

(54) **Commutateur électrique perfectionné, notamment pour véhicules automobiles**
Verbesserter elektrischer Kommutator für Kraftfahrzeuge
Improved electrical commutator for automobile vehicles

(30) Priorité: 17.09.1991 FR 9111429
(43) Date de publication de la demande: 24.03.1993
(73) Titulaire: MAGNETI MARELLI FRANCE, 92000 Nanterre (FR)
(72) Inventeur: Gauthier, Christian, F-92200 Neuilly sur Seine (FR)
(74) Mandataire: Martin, Jean-Jacques

(56) Documents cités:
- DE-B- 1 089 458
- US-A- 1 604 357
- US-A- 1 829 037
- US-A- 4 293 743
- US-A- 4 379 954

## Description

La présente invention concerne le domaine des commutateurs électriques, notamment des commutateurs électriques pour véhicules automobiles.

Plus précisément, la présente invention concerne des commutateurs électriques du type comprenant :
- un boîtier,
- des contacts électriques placés dans le boîtier,
- une manette portée à pivotement sur le boîtier autour d'un axe principal, et
- un coulisseau guidé à translation sur le boîtier et conçu pour être entraîné lors du pivotement de la manette, afin de modifier l'état de 6 contacts électriques associés.

Différents commutateurs électriques répondant à la définition donnée ci-dessus ont déjà été proposés.

On peut par exemple se référer aux documents US-A-4293743, US-A-4379954 et US-A-4393280.

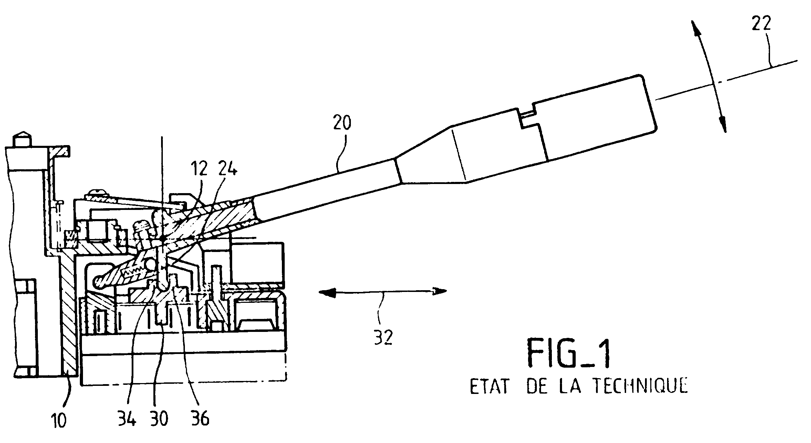

On a représenté sur la figure 1 annexée, un commutateur tel que décrit dans les documents précités.

On aperçoit sur la figure 1, un boîtier 10 qui porte une manette 20 à pivotement autour d'un axe 12. L'axe 12 est perpendiculaire au plan de la figure 1. La manette 20 est allongée et centrée sur un axe 22. L'axe 22 est sécant de l'axe 12 précité et orthogonal à celui-ci.

A son extrémité interne au boîtier 10, la manette 20 porte un doigt 24 généralement radial par rapport à l'axe 12 et sensiblement perpendiculaire à l'axe 22. Le boîtier 10 porte en outre un coulisseau 30 guidé à translation dans une direction 32 parallèle au plan de la figure 1, c'est-à-dire sensiblement perpendiculaire à l'axe 12 et généralement parallèle à l'axe 22.

Le coulisseau 30 est lié au doigt 24 de sorte que le coulisseau soit entraîné à translation selon la direction 32 lors du pivotement de la manette 20 autour de l'axe 12.

Par exemple, le coulisseau 30 peut être muni d'une fourchette à deux branches 34, 36 recevant le doigt 24.

Les commutateurs électriques décrits dans les documents précités et schématisés sur la figure I ont déjà rendu de grands services. Toutefois, on constate que ces commutateurs exigent fréquemment une place disponible importante sous la manette pour loger le doigt 24 et le coulisseau 30.

La place ainsi nécessaire n'est cependant pas toujours compatible avec l'encombrement limité imposé par les constructeurs automobiles.

Le document DE-B-1089458 décrit un système de commande à tringlerie pour piloter le pivotement indépendant de deux cylindres spatialement séparés. Plus précisément, ce document décrit une structure conçue pour être ré-utilisable selon divers positionnements de ces cylindres. A cet effet, ce système de commande comprend un boîtier principal qui porte un équipage pivotant autour d'un premier axe. Cet équipage pivotant lui-même porte une manette à pivotement autour d'un second axe orthogonal au premier axe précité. L'équipage porte un secteur denté en prise avec un pignon lié à un premier cylindre. Ainsi, le pivotement de l'équipage et de la manette simultanément, autour du premier axe entraîne la rotation du secteur denté et par conséquent la rotation du pignon associé. La manette est en outre prolongée au-delà du second axe. A ce niveau la manette est reliée, par une rotule à une première extrémité d'une tringle réglable en longueur. La seconde extrémité de la tringle est reliée par une seconde rotule sur l'extrémité d'une bielle radiale liée à un tourillon lui-même guidé à rotation sur un boîtier auxiliaire autour d'un axe perpendiculaire au premier axe (de l'équipage) et perpendiculaire au second axe (de la manette). Le tourillon porte en outre un second secteur denté en prise avec un second pignon lié au second cylindre. Ainsi le pivotement de la manette autour du second axe assure une translation de la tringle, sur sa longueur, et de là le pivotement de la bielle, du tourillon, et du second secteur denté, et par conséquent la rotation du second pignon associé.

Le but de la présente invention est de proposer une nouvelle structure de commutateur du type défini précédemment, qui permette de limiter l'encombrement sous la manette.

Ce but est atteint selon la présente invention grâce à un commutateur présentant les caractéristiques mentionnées dans la revendication 1.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 précédemment décrite représente une vue schématique en coupe d'un commutateur électrique conforme à l'état de la technique,
- la figure 2 représente une vue schématique en perspective éclatée des éléments principaux d'un commutateur électrique conforme à la présente invention,
- la figure 3 représente une vue partielle en coupe d'un commutateur électrique conforme à la présente invention selon un plan de coupe orthogonal à l'axe principal,
- la figure 4 représente une vue de dessus d'un coulisseau conforme à la présente invention,
- la figure 5 représente une vue de dessus d'un moyen intermédiaire d'entraînement conforme à la présente invention,
- la figure 6 représente une vue de dessus d'une platine de boîtier conforme à la présente invention, coulisseau et moyens intermédiaires d'entraînement retirés,
- la figure 7 représente une vue similaire à la figure 6 et montrant en outre la position du coulisseau et des moyens intermédiaires d'entraînement,
- la figure 8 représente une autre vue schématique partiellement en coupe du commutateur conforme à la présente invention, selon un autre plan de coupe perpendiculaire à l'axe principal,
- la figure 9 représente en perspective une variante de réalisation de moyens intermédiaires d'entraînement,
- la figure 10 représente une vue de dessus de la même variante de réalisation des moyens intermédiaires d'entraînement, et
- la figure 11 représente une vue développée de moyens d'indexation prévus sur les moyens intermédiaires d'entraînement conformes à cette variante de réalisation.

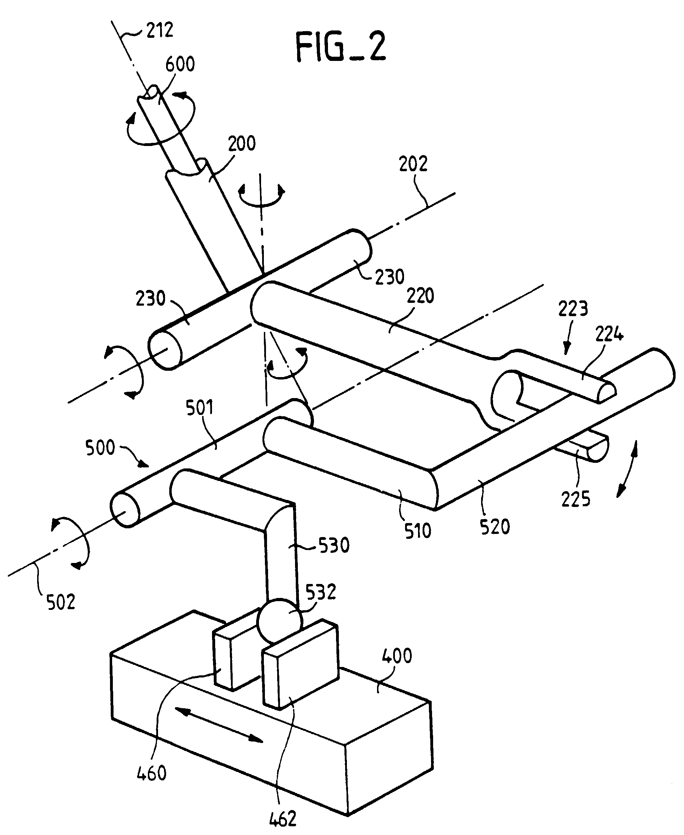

Sur les figures 2 et suivantes annexées, le boîtier de commutateur est référencé 100. Ce boîtier 100 peut faire l'objet de nombreux modes de réalisation. Par exemple, le boîtier 100 peut être formé par assemblage de différentes coquilles en matière plastique.

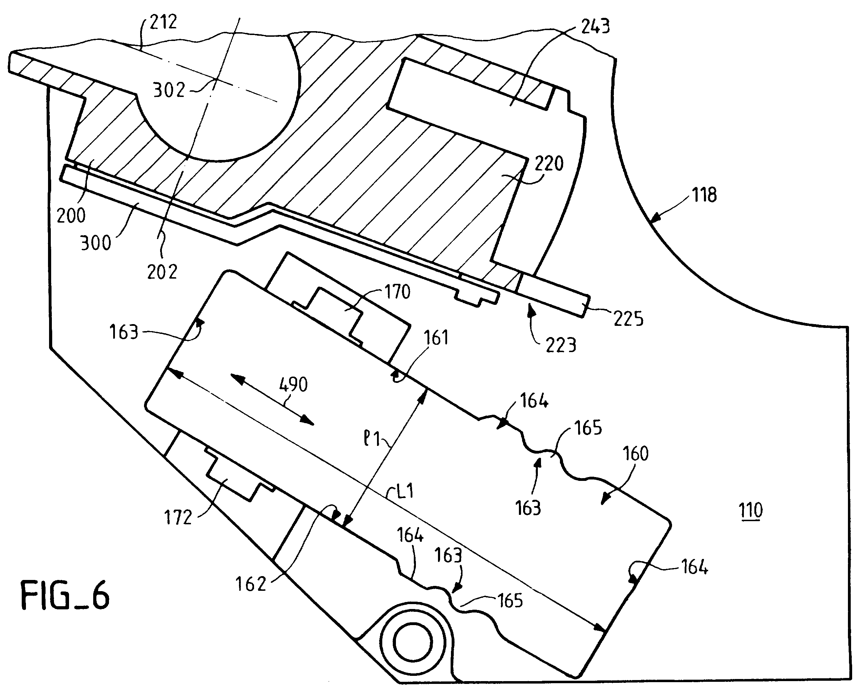

Le boîtier 100 comprend une platine 110 visible en particulier sur la figure 6. La platine 110 est généralement plane. Elle porte des contacts électriques.

Ces contacts électriques n'ont pas été représentés dans le détail sur les figures annexées dans la mesure où ils peuvent faire l'objet de nombreux modes de réalisation en fonction de chaque cas et chaque application particuliers.

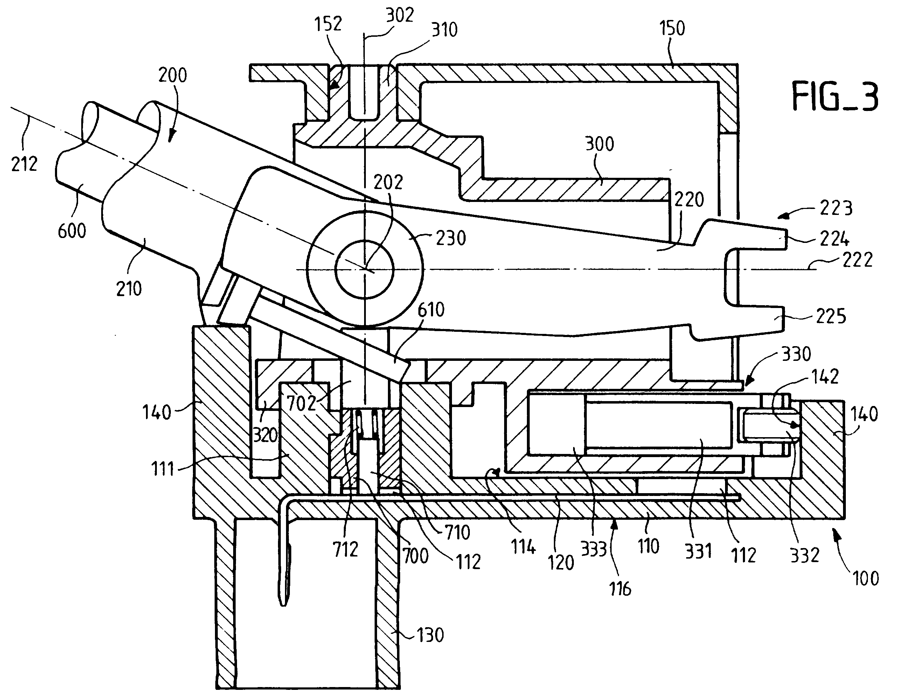

Toutefois, on notera que l'on distingue sur la figure 3, une lame 120 noyée dans la masse de la platine 110. Plus précisément, la platine 110 peut être surmoulée en matière plastique sur une pluralité de lamelles en matériau électriquement conducteur, telle que la lamelle référencée 120 sur la figure 3.

La platine 110 est munie de fenêtres 112 permettant d'accéder aux lames 120.

Les fenêtres 112 débouchent sur la surface intérieure 114 de la platine 110.

Les lames 120 sont de préférence pliées comme représenté sur la figure 3, pour être accessibles à l'intérieur d'un corps de connecteur 130 venu de moulage sur la surface extérieure 116 de la platine 110.

Le boîtier 100 est complété par des parois 140 généralement perpendiculaires à la platine 110 et un couvercle 150 sensiblement parallèle à cette platine 110.

De préférence, le boîtier 100 de commutateur est adapté pour être fixé sur une colonne de direction de véhicule automobile. Dans cette position, la platine 110 s'étend sensiblement perpendiculairement à l'axe de la colonne de direction.

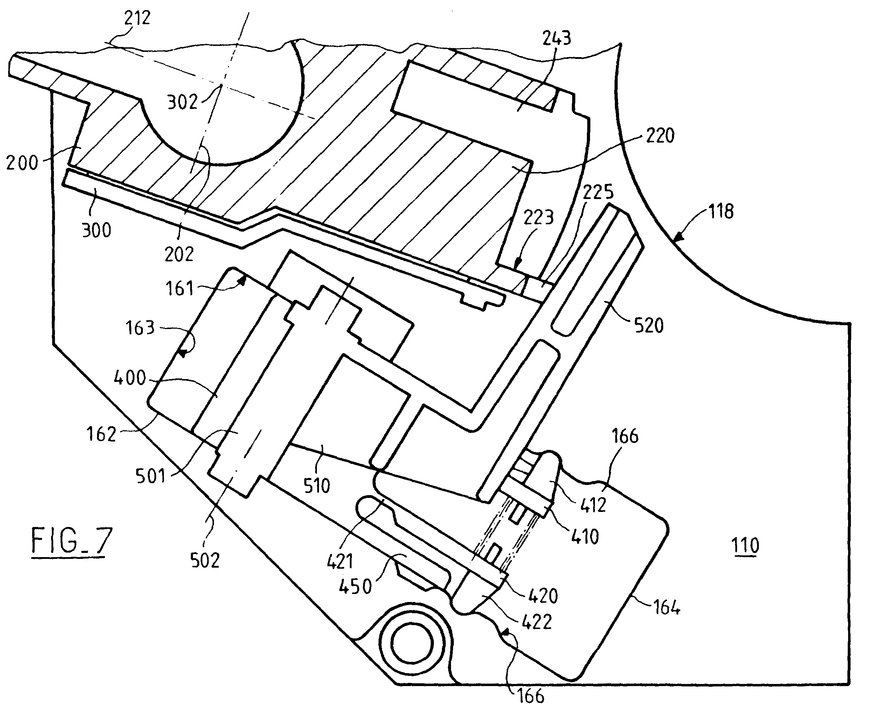

On distingue sur les figures 6 et 7 une forme cylindrique 118 généralement complémentaire de l'enveloppe externe de la colonne de direction.

La manette 200 est portée à pivotement sur le boîtier 110 autour d'un axe principal 202.

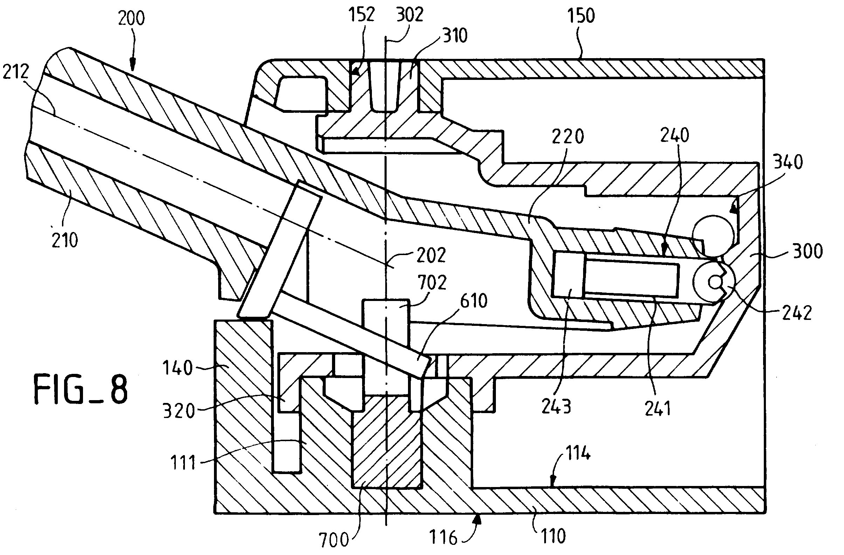

L'axe 202 est perpendiculaire au plan des figures 3 et 8. L'axe 202 est généralement parallèle au plan des figures 6 et 7 et à la platine 110.

Plus précisément, la manette 200 est portée à pivotement autour de l'axe 202 sur un équipage 300 lui-même porté à pivotement autour d'un axe auxiliaire 302.

L'axe 302 est sensiblement perpendiculaire à l'axe 202. L'axe 302 est généralement parallèle au plan des figures 3 et 8 et perpendiculaire au plan des figures 6 et 7 et à la platine 110.

L'équipage 300 est guidé à pivotement autour de l'axe 302 par la platine 110 et le couvercle 150.

On distingue sur les figures 3 et 8, un tourillon 310 solidaire de l'équipage 300. Le tourillon 310 est engagé dans un logement 152 complémentaire formé dans le couvercle 150 et centré sur l'axe 302.

On distingue également sur les figures 3 et 8 une structure cylindrique 111 centrée sur l'axe 302. La structure 111 est venue de moulage sur la platine 110 et fait saillie sur la surface interne 114 de celle-ci.

La structure 111 sert de guidage à une colerette cylindrique 320 complémentaire, solidaire de l'équipage 300.

De préférence, l'équipage 300 est indexé dans sa rotation autour de l'axe 302 par des moyens 330. Ces moyens sont visibles sur la figure 3.

De préférence, les moyens 330 comprennent un plot 331 muni d'un galet 332 et logé dans une chambre borgne 333 formée dans l'équipage 300. La chambre 333 s'étend sensiblement perpendiculairement à l'axe 202 et débouche en regard d'une paroi 140 du boîtier.

Un ressort intercalé entre le fond de la chambre borgne 333 et le plot 331 sollicite le galet 332 sur une surface d'indexation 142 formé sur la paroi 140 précitée.

Dans le cadre d'une application aux commutateurs électriques de véhicules automobiles, l'équipage 300 peut être utilisé pour piloter les indicateurs de changement de direction du véhicule, lors de son pivotement autour de l'axe 302.

Pour cela, il est de préférence prévu sur l'équipage 300 des moyens sollicités par une câme portée par l'arbre de direction afin de provoquer un rappel automatique en position de repos de l'équipage 300.

Le corps principal de la manette 200 est référencé 210 sur les figures annexées. Ce corps 210 est formé d'un tube cylindrique creux centré sur un axe 212.

L'axe 212 est perpendiculaire à l'axe 202. L'axe 212 est en outre sensiblement transversal à l'axe 302.

La manette 200 comprend un prolongement 220 sensiblement diamétralement opposé par rapport au corps 210 en regard de l'axe 202.

Le prolongement 220 est formé essentiellement d'un barreau allongé rigide centré sur un axe 222.

L'axe 212 du corps 210 et l'axe 222 du prolongement 220 peuvent être coaxiaux.

Toutefois, de préférence, l'axe 212 du corps 210 et l'axe 222 du prolongement 220 sont inclinés entre eux, par exemple de l'ordre de 170°.

Les axes 212 et 222 précités sont situés, de préférence, sensiblement dans un plan commun passant par l'axe 302.

L'extrémité libre 223 du prolongement 220 est munie d'une fourche à deux branches 224, 225.

Les branches 224, 225 sont symétriques par rapport à un plan perpendiculaire à l'axe 302 et sensiblement parallèle à l'axe 202, soit sensiblement parallèle à la platine 110.

La manette 200 est guidée à rotation autour de l'axe 202 par tous moyens classiques appropriés. Il s'agit de préférence de tourillons 230 solidaires de la manette 200. Les tourillons 230 sont centrés sur l'axe 202 et reposent sur des portées d'appui cylindriques complémentaires formées sur l'équipage 300.

De préférence, la manette 200 est indexée dans son déplacement autour de l'axe 202 par des moyens 240.

Ces moyens 240 sont visibles sur la figure 8.

Selon un mode de réalisation avantageux, les moyens d'indexation 240 de la manette 200, dans sa rotation autour de l'axe 202 comprennent un plot 241 muni d'un galet 242 et engagé dans une chambre borgne 243 formée dans le prolongement 220. La chambre 243 s'étend sensiblement parallèlement à l'axe 222. Un ressort intercalé entre le fond de la chambre 243 et le plot 241 sollicite le galet 242 contre une surface d'indexation 340 prévue sur l'équipage pivotant 300.

L'axe du galet 242 est parallèle à l'axe 202.

La surface d'indexation 340 définit par exemple deux dièdres concaves aptes à recevoir successivement le galet 242 pour définir deux positions stables de la manette dans son pivotement autour de l'axe 202.

La manette 200 munie du prolongement 220 peut être formée par moulage de matière plastique, en une pièce unique.

Le commutateur conforme à l'invention comprend en outre un coulisseau 400 guidé à translation par le boîtier 100. Le coulisseau 400 est conçu pour être entraîné lors du pivotement de la manette 200 afin de modifier l'état de contacts électriques associés portés par la platine 110.

De préférence, le coulisseau 400 est guidé sur la platine 110.

De nombreux moyens peuvent être prévus pour guider à translation le coulisseau 400.

Selon le mode de réalisation préférentiel représenté sur les figures annexées, le coulisseau 400 est placé dans une chambre 160 formée dans la platine 110 et qui débouche sur la surface interne 114 de celle-ci.

Selon la représentation donnée sur la figure 6, la chambre 160 est de contour général rectangulaire. Elle est délimitée par deux faces longitudinales 161, 162 parallèles entre elles et deux faces transversales 163, 164 parallèles entre elles et orthogonales aux faces longitudinales 161, 162.

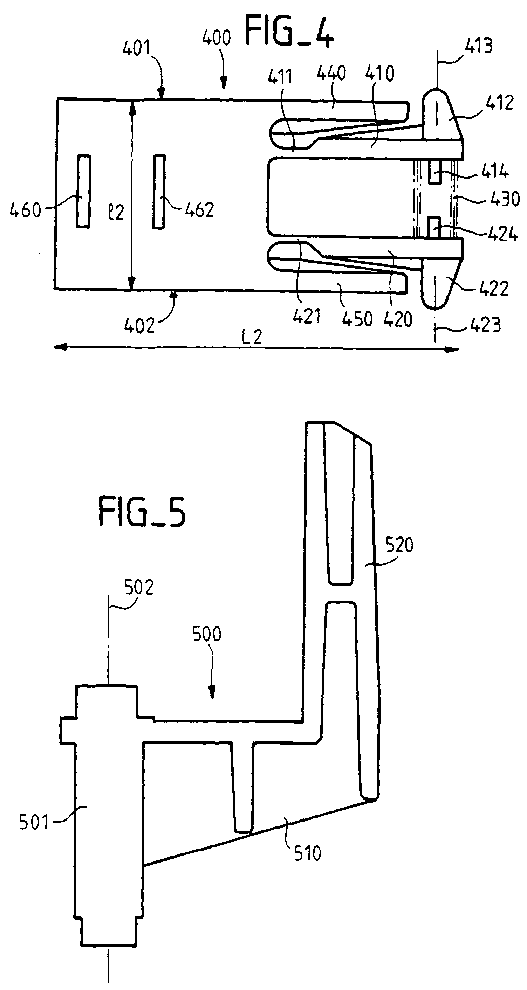

De même, le coulisseau 400 représenté sur la figure 4, possède un contour général rectangulaire. Les faces longitudinales du coulisseau, parallèles entre elles, sont référencées 401, 402.

La largeur 11 de la chambre 160 séparant les faces longitudinales 161, 162 est sensiblement complémentaire de la largeur 12 du coulisseau, c'est-à-dire la largeur 12 séparant les faces longitudinales 401, 402.

Par ailleurs, la longueur L1 de la chambre 160 est nettement supérieure à la longueur L2 du coulisseau 400.

Ainsi, le coulisseau 400 est guidé à translation dans la chambre 160, selon la longueur de celle-ci.

Le coulisseau 400 est de préférence indexé dans son déplacement à translation dans la chambre 160.

Pour cela, la chambre 160 est de préférence munie, sur ses faces longitudinales 161, 162, de rampes d'indexage 163.

De préférence, il est prévu dans la chambre 160 un nombre de crans d'indexage 164, 165 identiques au nombre de crans d'indexage 340 prévus sur l'équipage 300 pour la manette 200. Les crans d'indexage 164, 165 se succèdent sur les faces longitudinales 161, 162, sur la longueur de celles-ci.

De son côté, le coulisseau 400 comprend deux bras longitudinaux 410, 420 parallèles entre eux et sensiblement parallèles aux faces longitudinales 401, 402. Les bras longitudinaux s'étendent parallèlement à la platine 110. Ils sont formés en retrait vers l'intérieur du coulisseau 400 par rapport aux faces longitudinales 401, 402.

Les bras longitudinaux 410, 420 sont liés au corps du coulisseau 400 par des amincissements 411, 421 formant articulation pour les bras longitudinaux 410, 420.

Les extrémités libres des bras longitudinaux 410, 420 sont munies de doigts 412, 422. Les doigts 412, 422 sont orientés perpendiculairement aux bras longitudinaux 410, 420, sur l'extérieur de ceux-ci et émergent au-delà des faces longitudinales 401, 402. Les axes 413, 423 des doigts 412, 422 sont perpendiculaires aux faces longitudinales précitées 401, 402 du coulisseau.

Un ressort 430 intercalé entre les extrémités libres des bras 410, 420 sollicite ceux-ci vers l'extérieur.

Le ressort 430 est maintenu en position grâce à des tétons 414, 424 coaxiaux prévus en saillie sur la surface interne des bras longitudinaux 410, 420.

Le déplacement des bras longitudinaux 410, 420, vers l'extérieur du coulisseau, sous l'effet du ressort 430, est limité par une paire de bras rigides longitudinaux 440, 450. Ces derniers sont prévus respectivement sur l'extérieur des bras articulés 410, 420 et dans le prolongement des faces longitudinales 401, 402.

L'homme de l'art comprendra aisément que lors du déplacement du coulisseau 400 dans la chambre 160, les doigts 412, 422 se déplacent successivement dans les crans d'indexage 164, 165. Le coulisseau occupe une position stable lorsque les doigts 412, 422 reposent ainsi contre le fond d'un cran d'indexage 164, 165.

Le sens de translation du coulisseau 400, c'est-à-dire la longueur de la chambre 160 est de préférence sensiblement perpendiculaire à l'axe 202. Toutefois, on peut prévoir une inclinaison légèrement différente. La direction de translation du coulisseau 400 est référencée 490 sur la figure 6.

On a ainsi représenté sur les figures annexées, une inclinaison de la direction de déplacement du coulisseau 400 d'environ 100° par rapport à l'axe 202.

Comme indiqué précédemment, selon la présente invention, il est prévu en outre des moyens intermédiaires d'entraînement 500 intercalés entre la manette 200 et le coulisseau 400.

Ces moyens intermédiaires d'entraînement 500 sont montés à rotation sur le boîtier 100 autour d'un axe secondaire 502. L'axe 502 est sensiblement parallèle à l'axe principal 202.

Toutefois, l'axe 502 peut être au moins légèrement incliné par rapport à l'axe principal 202.

Ainsi, selon le mode de réalisation représenté sur les figures annexées, l'axe secondaire 502 est incliné d'environ 10° par rapport à l'axe principal 202.

En outre, il est prévu des moyens 520 assurant une liaison d'entraînement entre les moyens 500 et le prolongement 220 de la manette 200, ainsi que des moyens 530 assurant une liaison d'entraînement entre les moyens intermédiaires d'entraînement 500 et le coulisseau 400.

Selon le mode de réalisation représenté sur les figures annexées, les moyens d'entraînement 500 comprennent un arbre 501 centré sur l'axe secondaire 502. L'arbre 501 est guidé par des portées cylindriques 170, 172 formées sur le boîtier 100 et centrées sur l'axe 502.

L'arbre 501 porte un bras de liaison 510 sensiblement radial par rapport à l'axe 502. Le bras de liaison 510 s'étend sensiblement parallèlement à la platine 110.

Le bras de liaison 510 porte lui-même un bras de commande 520. Le bras de commande 520 est généralement parallèle à l'axe 502.

Les positions de l'axe principal 202 et de l'axe secondaire 502 et la longueur du prolongement 220 et du bras de liaison 510 sont telles que le bras de commande 520 est engagé entre les deux branches 224, 225 de la fourche prévue à l'extrémité du prolongement 220.

L'homme de l'art comprendra aisément que le pivotement de la manette 200 autour de l'axe principal 202 entraîne un pivotement des moyens intermédiaires d'entraînement 500 autour de l'axe secondaire 502.

L'arbre 501 porte en outre un second bras 530 généralement radial par rapport à l'axe 502. Le bras 530 est sensiblement orthogonal au bras de liaison 510. Le bras 530 est muni à son extrémité libre d'une rotule 532 engagée dans une fourchette à deux branches 460, 462 liées au coulisseau 400. Les deux branches 460, 462 de la fourchette précitée sont symétriques par rapport à un plan parallèle à l'axe 502.

Ainsi, les pivotements des moyens 500 autour de l'axe secondaire 502, provoqués par le pivotement de la manette 200 autour de l'axe principal 202 entraînent un déplacement à translation du coulisseau 400.

Les dispositions qui viennent d'être décrites, en particulier, l'utilisation de moyens intermédiaires d'entraînement 500 entre la manette 200 et le coulisseau 400 offrent une grande latitude de positionnement du coulisseau 400. Celui-ci en effet n'a pas besoin d'être sous-jacent à l'axe 302. il suffit pour celà de prendre, comme indiqué précédemment, un bras de liaison 510 de longueur inférieure au prolongement 220.

De plus, la distance entre l'axe secondaire 502 et la surface 114 de la platine 110 peut être supérieure à la distance séparant l'axe principal 202 de la même surface 114 de la platine 110.

Le pivotement de la manette 200 autour de l'axe 202 et la translation résultante du coulisseau 400 peuvent être utilisés pour assurer une commutation feux de croisement/feux de route du véhicule automobile.

De préférence et de façon connue en soi, la manette creuse 200 reçoit une tige 600 centrée sur l'axe 212. La tige 600 est guidée à rotation autour de cet axe 212. La tige 600 émerge à l'extérieur de la manette 200 pour être entraînée par un utilisateur à rotation autour de l'axe 212.

La tige 600 émerge de plus dans le boîtier 100, sensiblement au niveau de l'axe 302. A ce niveau, la tige 600 est munie d'un doigt 610 sensiblement parallèle à l'axe 212 mais non coaxial à celui-ci donc décentré. Lors de la rotation de la tige 600 autour de l'axe 212, le doigt 610 se déplace sur un arc centré sur cet axe 612.

Le doigt 610 coopère avec un tiroir 700 guidé à translation sur la platine 110 dans une direction généralement parallèle à l'axe 202. Le tiroir 700 est visible en particulier sur les figures 3 et 8.

Le doigt 610 est engagé entre les deux branches d'une fourche liée à la surface supérieure du tiroir 700. L'une de ces branches est visible sur les figures 3 et 8 sous la référence 702.

Le tiroir 700 peut être utilisé pour modifier l'état de liaison de contacts électriques portés par la platine 110. On a représenté schématiquement sur la figure 3, un plot électriquement conducteur 710 sollicité par un ressort 712 contre des lames électriquement conductrices portées par la platine 110 afin de modifier l'état de liaison de celles-ci.

On notera que le pivotement de la manette 200 autour de l'axe 202 pour entraîner le pivotement des moyens 500 autour de l'axe 502, grâce à la liaison définie entre la fourche du prolongement 220 et le bras 520, et de là la translation du coulisseau 400, est possible quelle que soit la position de la tige 600 par rapport à l'axe 212, et quelle que soit la position de l'équipage 300 autour de l'axe 302.

Inversement, la tige 600 peut être entraînée à rotation autour de l'axe 212 et l'équipage 300 peut être entraîné à rotation autour de l'axe 302 quelle que soit la position de la manette 200 autour de l'axe 202.

La structure de commutateur proposée dans le cadre de la présente invention permet de placer tous les contacts électriques associés au coulisseau 400, à l'équipage mobile 300 et au tiroir 700, sur la platine plane 110.

Le tiroir 700 peut être utilisé pour opérer une sélection d'éclairage veilleuse ou feux de croisement/feux de route sur véhicules automobiles.

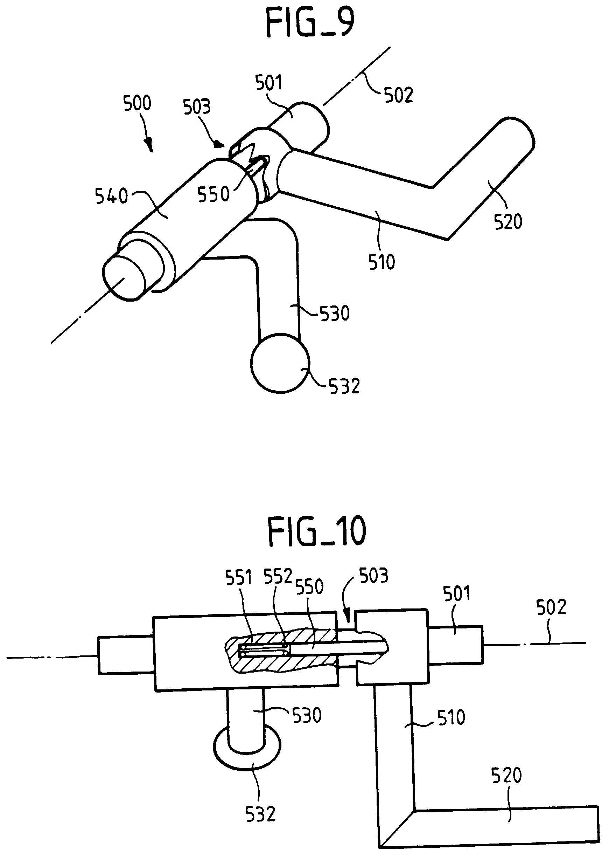

On va maintenant décrire une variante de réalisation conforme à la présente invention représentée sur les figures 9, 10 et 11.

Selon cette variante de réalisation, les moyens intermédiaires d'entraînement 500 placés entre la manette 200 et le coulisseau 400 sont scindés en deux parties.

Une première partie de ces moyens 500 est formée par l'arbre 501 guidé à rotation autour de l'axe secondaire 502 sur le boîtier et qui porte rigidement le bras de liaison radial 510 équipé du bras 520 généralement parallèle à l'axe 502 et qui pénètre dans la fourche prévue sur le prolongement 220.

La seconde partie des moyens 500 est formée d'un manchon 540 porté à rotation sur l'arbre 501 et qui porte le bras radial 530 équipé de la rotule 532.

De façon comparable au mode de réalisation représenté sur les figures 2 à 8, selon la figure 9, le bras radial 530 s'étend sensiblement orthogonalement au bras de liaison 510 et au bras de commande 520.

Par ailleurs, il est prévu des moyens définissant une liaison indexée entre les deux parties des moyens 500, avec débattement angulaire limité entre celles-ci.

En l'espèce, ces moyens définissant une liaison indexée comprennent un doigt 550 placé dans un logement borgne prévu dans le manchon 540. Le logement 551 s'étend parallèlement à l'axe 502. Un ressort 552 intercalé entre le fond du logement 551 et le doigt 550 sollicite ce dernier contre une surface d'indexation 503 prévue sur l'arbre 501.

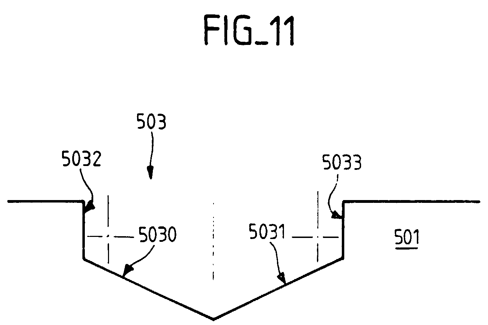

On a représenté sur la figure 11 annexée, un exemple de réalisation d'un cran d'indexage 503 prévu sur l'arbre 501.

Comme représenté sur cette figure 11, de préférence, le cran d'indexage 503 prévu sur l'arbre 501 comprend un dièdre concave formé de deux faces 5030, 5031, planes de préférence, symétriques par rapport à un plan axial passant par l'axe 502 et deux flancs latéraux 5032, 5033 parallèles à l'axe 311 et orientés généralement radialement par rapport à celui-ci.

A titre d'exemple non limitatif, l'inclinaison des faces 5030, 5031 par rapport à un plan orthogonal à l'axe 502 est de l'ordre de 25°. L'inclinaison des faces 5030, 5031 entre elles est donc typiquement de l'ordre de 130°.

Le ressort 552 sollicitant le plot d'indexage 550 et l'élasticité des bras d'indexage 410, 420 prévus sur le coulisseau 400 sont choisis de sorte que l'effort résistant au déplacement exercé par les bras 410, 420 soit supérieur à l'effort résistant du ressort 552.

Le fonctionnement de la variante de réalisation représenté sur les figures 9 et 10 reste essentiellement identique au fonctionnement du dispositif précédemment décrit en regard des figures 2 à 8.

Toutefois, on notera que grâce à la présence du ressort 552 intercalé entre les deux parties des moyens 500, dans une phase initiale du déplacement de la manette 200 autour de l'axe principal 202, seule la première partie 501, 510, 520, des moyens 500 est entraînée à rotation autour de l'axe secondaire 502. Dans cette phase initiale, le tiroir 400 et la seconde partie 530, 540 des moyens 500 est maintenue en position par l'effort résistant des bras d'indexation 410, 420. Au cours de cette phase initiale, l'élément élastique 552 est par conséquent comprimé et emmagasine de l'énergie.

Le plot 550 glisse sur l'une des faces 5030, 5031. Puis le plot 550 vient en contact contre l'un des flancs latéraux 5032, 5033 du cran d'indexage 503. Un entraînement positif entre les deux parties des moyens 500 est alors obtenu et le coulisseau 400 est forcé à déplacement. Dès que les doigts d'indexage 412, 422 sont placés en regard d'un nouveau cran d'indexage 164, 165, le tiroir 400 est libéré. Il en est de même des moyens 500. Le ressort 552 sollicite alors le plot 550 contre le fond du cran d'indexage 503 et accélère par conséquent le déplacement du coulisseau 400 et des contacts électriques associés.

D'autres variantes peuvent être prévues pour garantir des phases d'ouverture et de fermeture brusques des contacts électriques associés au tiroir 400.

On peut par exemple prévoir de former l'arbre 501 sous forme d'une barre de torsion entre les points de liaison/ancrage du bras 510 ou 520 et du bras 530. Dans ce cas, la barre de torsion peut fléchir dans une phase initiale du déplacement de la manette 200, puis entraîner positivement le coulisseau 400 et restituer de l'énergie emmagasinée dans la phase initiale, lorsque le coulisseau atteint une nouvelle position d'indexation.

Bien entendu la présente invention n'est pas limitée au mode de réalisation particulier qui vient d'être décrit mais s'étend à toutes variantes conformes à son esprit.

Par exemple, au niveau de l'engagement d'entraînement des moyens 500 et de la manette 200, on peut prévoir à l'inverse de la disposition représentée sur les figures annexées et précédemment décrits, une fourche solidaire de l'extrémité du bras de commande 520 engagée sur le prolongement 220 solidaire de la manette.

De même, on peut prévoir de placer une fourche sur le bras 530 et une rotule associée sur la surface du coulisseau 400.

De même, on peut inverser la position des crans d'indexage 503 et du plot 550 sur les deux parties des moyens d'entraînement 500.

## Revendications

1. Commutateur électrique, notamment pour véhicules automobiles, du type comprenant:
- un boîtier (100),
- des contacts électriques placés dans le boîtier,
- une manette (200) portée à pivotement dans le boîtier (100) autour d'un axe principal (202), et
- un coulisseau (400) guidé à translation dans le boîtier (100) et conçu pour être entraîné lors du pivotement de la manette (200) afin de modifier l'état de contacts électriques associés,
caractérisé par le fait qu'il est prévu un prolongement (220) de la manette (200) au-delà de l'axe principal (202) et que le commutateur comprend en outre :
- des moyens intermédiaires d'entraînement (500) montés à rotation dans le boîtier (100) autour d'un axe secondaire (502), lesquels moyens intermédiaires d'entraînement (500) comprennent un arbre (501) guidé à rotation dans le boîtier (100) autour de l'axe secondaire (502) et qui porte, d'une part un bras (520) décalé parallèlement à l'axe secondaire (502), et d'autre part un bras (530) perpendiculaire à l'axe secondaire (502),
- des moyens (224, 225, assurant une liaison d'entraînement entre le bras (520) des moyens intermédiaires d'entraînement (500) parallèle à l'axe secondaire (502) et le prolongement (220) solidaire de la manette (200), et
- des moyens (460, 462) assurant une liaison d'entraînement entre le bras (530) des moyens intermédiaires d'entraînement (500) perpendiculaire à l'axe secondaire (502) et le coulisseau (400).

2. Commutateur électrique selon la revendication 1, caractérisé par le fait que l'axe secondaire (502) est parallèle à l'axe principal (202).

3. Commutateur électrique selon l'une des revendications 1 ou 2, caractérisé par le fait que les moyens assurant une liaison d'entraînement entre les moyens intermédiaires d'entraînement (500) et le prolongement (220) solidaire de la manette (200) comprennent une fourchette à deux branches (224, 225) prévues sur l'un des éléments (220) pour recevoir l'autre (520) de ces deux éléments.

4. Commutateur électrique selon l'une des revendications 1 à 3, caractérisé par le fait que les moyens assurant une liaison d'entraînement entre les moyens intermédiaires d'entraînement (500) et le coulisseau (400) comprennent une fourchette à deux branches (460, 462) prévues sur l'un de ces éléments (400) pour recevoir l'autre (530) de ces deux éléments.

5. Commutateur électrique selon l'une des revendications 1 à 4, caractérisé par le fait que l'axe secondaire (502) est incliné par rapport à l'axe principal (202).

6. Commutateur électrique selon l'une des revendications 1 à 5, caractérisé par le fait que le prolongement (220) de la manette est coaxial au corps principal (210) de celle-ci.

7. Commutateur électrique selon l'une des revendications 1 à 5, caractérisé par le fait que le prolongement (220) de la manette n'est pas coaxial au corps principal (210) de celle-ci.

8. Commutateur électrique selon l'une des revendications 1 à 7, caractérisé par le fait que la manette (220) est portée à pivotement autour de l'axe principal (202) sur un équipage (300) lui-même porté à pivotement sur le boîtier (100) autour d'un axe (302) orthogonal à l'axe principal (202).

9. Commutateur électrique selon l'une des revendications 1 à 8, caractérisé par le fait que la manette (200) reçoit une tige (600) libre de rotation autour d'un axe (212) orthogonal à l'axe principal (202).

10. Commutateur électrique selon l'une des revendications 1 à 9, caractérisé par le fait que la manette (200) est indexée dans sa rotation autour de l'axe 202.

11. Commutateur électrique selon l'une des revendications 1 à 10, caractérisé par le fait que le coulisseau (400) est indexé dans son déplacement à translation.

12. Commutateur électrique selon l'une des revendications 1 à 11, caractérisé par le fait que le coulisseau (400) est guidé dans une chambre (160) formée dans le boîtier (100).

13. Commutateur électrique selon l'une des revendications 1 à 12, caractérisé par le fait que le coulisseau (400) est muni de doigts élastiques (412, 422) sollicités contre une surface d'indexage prévue sur le boîtier (100).

14. Commutateur électrique selon l'une des revendications 1 à 13, caractérisé par le fait que le coulisseau (400) comprend deux bras élastiques (410, 420) venus de moulage sollicités par un ressort (430) vers une surface d'indexation (163) et deux bras rigides (440, 450) limitant le déplacement des bras élastiques (410, 420).

15. Commutateur électrique selon l'une des revendications 1 à 14, caractérisé par le fait que le boîtier (100) comprend une platine (110) généralement plane qui porte les différents contacts électriques.

16. Commutateur électrique selon l'une des revendications 1 à 15, caractérisé par le fait que le boîtier (100) comprend une platine (110) généralement plane surmoulée sur des lames de contacts électriques (120).

17. Commutateur électrique selon l'une des revendications 1 à 16, caractérisé par le fait que les moyens intermédiaires d'entraînement (500) sont formés de deux pièces séparées et qu'un élément élastique (552) est intercalé entre celles-ci.

18. Commutateur électrique selon la revendication 17, caractérisé par le fait qu'il est prévu en outre un manchon (540) guidé à rotation sur l'arbre (501) et qui porte ledit bras (530) apte à coopérer avec le coulisseau (400).

19. Commutateur électrique selon l'une des revendications 17 ou 18, caractérisé par le fait qu'il comprend des moyens (552, 503) définissant une liaison indexée entre les deux pièces des moyens intermédiaires d'entraînement (500).

20. Commutateur électrique selon la revendication 19, caractérisé par le fait que les moyens définissant une liaison indexée entre les deux pièces des moyens intermédiaires d'entraînement (500) comprennent, d'une part au moins un dièdre concave d'indexage (503) comportant deux faces principales (5030, 5031) symétriques d'un plan passant par l'axe secondaire (502) et limités par deux flancs (5032, 5033) radiaux par rapport à l'axe secondaire (502), et d'autre part au moins un doigt (550) qui repose sur le dièdre concave d'indexage (503) entre les flancs de celui-ci.

21. Commutateur électrique selon l'une des revendications 19 ou 20, caractérisé par le fait que les moyens définissant une liaison indexée entre les deux pièces composant les moyens intermédiaires d'entraînement exercent sur l'une de celles-ci un effort résistant inférieur à celui exercé sur le coulisseau.

22. Commutateur électrique selon la revendication 2, caractérisé par le fait que l'arbre (501) comprend une barre de torsion entre le point d'ancrage du bras (520) coopérant avec le prolongement (220) de la manette (200) et le point d'ancrage du bras (530) coopérant avec le coulisseau (400).

## Patentansprüche

1. Elektrischer Schalter, insbesondere für Kraftfahrzeuge, mit:
- einem Gehäuse (100);
- elektrischen Kontakten, die in dem Gehäuse (100) angeordnet sind;
- einem Bedienungshebel (200), der um eine Hauptachse (202) schwenkbar in dem Gehäuse (100) gehalten ist; und
- einem Gleitblock (400), der verschiebbar in dem Gehäuse (100) gehalten ist und dazu entworfen ist, während des Schwenkens des Bedienungshebels (200) mitgenommen zu werden, um den Zustand von zugeordneten elektrischen Kontakten zu ändern,
dadurch **gekennzeichnet,** daß an dem Bedienungshebel (200) jenseits der Hauptachse (202) eine Verlängerung (220) vorgesehen ist, und daß der elektrische Schalter darüber hinaus aufweist:
- Mitnahme-Zwischenmittel (500), die um eine Sekundärachse (502) drehbar in dem Gehäuse (100) angebracht sind und die eine Welle (501) umfassen, die um die Sekundärachse (502) drehbar in dem Gehäuse (100) geführt ist und die einerseits einen parallel zur Sekundärachse (502) versetzten Arm (520) und andererseits einen zur Sekundärachse (502) rechtwinkligen Arm (530) trägt;
- Mittel (224, 225), die eine Mitnahmeverbindung zwischen dem zur Sekundärachse (502) parallelen Arm (520) der Mitnahme-Zwischenmittel (500) und der fest mit dem Bedienungshebel (200) verbundenen Verlängerung (220) sichern; und
- Mittel (460, 462), die eine Mitnahmeverbindung zwischen dem zur Sekundärachse (502) rechtwinkligen Arm (530) der Mitnahme-Zwischenmittel (500) und dem Gleitblock (400) sichern.

2. Elektrischer Schalter nach Anspruch 1, dadurch **gekennzeichnet,** daß die Sekundärachse (502) parallel zur Hauptachse (202) ist.

3. Elektrischer Schalter nach einem der Ansprüche 1 oder 2, dadurch **gekennzeichnet,** daß die Mittel, die eine Mitnahmeverbindung zwischen den Mitnahme-Zwischenmitteln (500) und der fest mit dem Bedienungshebel (200) verbundenen Verlängerung (220) sichern, eine Gabel mit zwei Zinken (224, 225) umfassen, die so an einem (220) der Elemente vorgesehen sind, daß sie das andere (520) der beiden Elemente aufnehmen.

4. Elektrischer Schalter nach einem der Ansprüche 1 bis 3, dadurch **gekennzeichnet,** daß die Mittel, die eine Mitnahmeverbindung zwischen den Mitnahme-Zwischenmitteln (500) und dem Gleitblock (400) sichern, eine Gabel mit zwei Zinken (460, 462) umfassen, die so an einem (400) der Elemente vorgesehen sind, daß sie das andere (530) der beiden Elemente aufnehmen.

5. Elektrischer Schalter nach einem der Ansprüche 1 bis 4, dadurch **gekennzeichnet,** daß die Sekundärachse (502) in Bezug auf die Hauptachse (202) geneigt ist.

6. Elektrischer Schalter nach einem der Ansprüche 1 bis 5, dadurch **gekennzeichnet,** daß die Verlängerung (220) des Bedienungshebels zu dessen Hauptkörper (210) koaxial ist.

7. Elektrischer Schalter nach einem der Ansprüche 1 bis 5, dadurch **gekennzeichnet,** daß die Verlängerung (220) des Bedienungshebels zu dessen Hauptkörper (210) nicht koaxial ist.

8. Elektrischer Schalter nach einem der Ansprüche 1 bis 7, dadurch **gekennzeichnet,** daß der Bedienungshebel (220) um die Hauptachse (202) schwenkbar an einem beweglichen Organ (300) gehalten ist, das seinerseits um eine zur Hauptachse (202) orthogonale Achse (302) schwenkbar an dem Gehäuse (100) gehalten ist.

9. Elektrischer Schalter nach einem der Ansprüche 1 bis 8, dadurch **gekennzeichnet,** daß der Bedienungshebel (200) einen Schaft (600) aufnimmt, der um eine zur Hauptachse (202) orthogonale Achse (212) frei drehbar ist.

10. Elektrischer Schalter nach einem der Ansprüche 1 bis 9, dadurch **gekennzeichnet,** daß die Drehbewegung des Bedienungshebels (200) um die Achse (202) rastend ist.

11. Elektrischer Schalter nach einem der Ansprüche 1 bis 10, dadurch **gekennzeichnet,** daß die Schubbewegung des Gleitblocks (400) rastend ist.

12. Elektrischer Schalter nach einem der Ansprüche 1 bis 11, dadurch **gekennzeichnet,** daß der Gleitblock (400) in einer Kammer (160) geführt ist, die in dem Gehäuse (100) ausgebildet ist.

13. Elektrischer Schalter nach einem der Ansprüche 1 bis 12, dadurch **gekennzeichnet,** daß der Gleitblock (400) mit elastischen Fingern (412, 422) ausgestattet ist, die gegen eine Rastoberfläche belastet sind, die an dem Gehäuse (100) vorgesehen ist.

14. Elektrischer Schalter nach einem der Ansprüche 1 bis 13, dadurch **gekennzeichnet,** daß der Gleitblock (400) zwei elastische Arme (410, 420), die durch Gießen hergestellt sind und durch eine Feder (430) gegen eine Rastoberfläche (163) belastet sind, und zwei starre Arme (440, 450) aufweist, die die Verschiebung der elastischen Arme (410, 420) begrenzen.

15. Elektrischer Schalter nach einem der Ansprüche 1 bis 14, dadurch **gekennzeichnet,** daß das Gehäuse (100) eine im allgemeinen flache Grundplatte (110) aufweist, die die verschiedenen elektrischen Kontakte trägt.

16. Elektrischer Schalter nach einem der Ansprüche 1 bis 15, dadurch **gekennzeichnet,** daß das Gehäuse (100) eine im allgemeinen flache Grundplatte (110) aufweist, die um Zungen von elektrischen Kontakten (120) gegossen ist.

17. Elektrischer Schalter nach einem der Ansprüche 1 bis 16, dadurch **gekennzeichnet,** daß die Mitnahme-Zwischenmittel (500) aus zwei einzelnen Teilen gebildet werden, und daß ein elastisches Element (552) zwischen diese gefügt ist.

18. Elektrischer Schalter nach Anspruch 17, dadurch **gekennzeichnet,** daß zudem eine Muffe (540) vorgesehen ist, die drehbar auf der Welle (501) geführt ist und die den besagten Arm (530) trägt, der für die Zusammenarbeit mit dem Mitnahme-Zwischenmittel (500) geeignet ist.

19. Elektrischer Schalter nach einem der Ansprüche 17 oder 18, dadurch **gekennzeichnet,** daß er Mittel (552, 503) aufweist, die eine rastende Verbindung zwischen den beiden Teilen der Mitnahme-Zwischenmittel (500) definieren.

20. Elektrischer Schalter nach Anspruch 19, dadurch **gekennzeichnet,** daß die Mittel, die eine rastende Verbindung zwischen den beiden Teilen der Mitnahme-Zwischenmittel (500) definieren, einerseits wenigstens ein konkaves Rast-Dieder (503) mit zwei Hauptseiten (5030, 5031), die symmetrisch zu einer durch die Sekundärachse (502) gehenden Ebene sind und von zwei in Bezug auf die Sekundärachse (502) radialen Flanken (5032, 5033) begrenzt werden, und andererseits wenigstens einen Finger (550) aufweisen, der auf dem konkaven Rast-Dieder (503) zwischen dessen Flanken ruht.

21. Elektrischer Schalter nach einem der Ansprüche 19 oder 20, dadurch **gekennzeichnet,** daß die Mittel, die eine rastende Verbindung zwischen den beiden die Mitnahme-Zwischenmittel bildenden Teilen definieren, auf das eine dieser Teile einen Fahrwiderstand ausüben, der kleiner als der auf den Gleitblock ausgeübte ist.

22. Elektrischer Schalter nach Anspruch 2, dadurch **gekennzeichnet,** daß die Welle (501) zwischen dem Verankerungspunkt des mit der Verlängerung (220) des Bedienungshebels (200) zusammenarbeitenden Armes (520) und dem Verankerungspunkt des mit dem Gleitblock (400) zusammenarbeitenden Armes (520) einen Torsionsstab aufweist.

## Claims

1. An electrical switch, in particular for motor vehicles, the switch being of the type comprising:
. a housing (100);
. electrical contacts placed inside the housing;
. a handle (200) mounted in the housing (100) to pivot about a main axis (202); and
. slide (400) guided in translation inside the housing (100) and designed to be driven during pivoting of the handle (200) to modify the state of associated electrical contacts;
the switch being characterized by the fact that the handle (200) is provided with an extension (220) beyond the main axis (202) and that the switch further comprises:
. intermediate drive means (500) mounted to rotate in the housing (100) about a secondary axis (502), which intermediate drive means (500) comprise a shaft (501) guided to rotate in the housing (100) about the secondary axis (502) and carrying both an arm (520) offset parallel to the secondary axis (502), and an arm (530) perpendicular to the secondary axis (502);
. means (224, 225) providing a driving connection between the arm (520) of the intermediate drive means (500) parallel to the secondary axis (502) and the extension (220) secured to the handle (200); and
. means (460, 462) providing a driving connection between the arm (530) of the intermediate drive means (500) perpendicular to the secondary axis (502) and the slide (400).

2. An electrical switch according to claim 1, characterized by the fact that the secondary axis (502) is parallel to the main axis (202).

3. An electrical switch according to claim 1 or 2, characterized by the fact that the means providing a driving connection between the intermediate drive means (500) and the extension (220) secured to the handle (200) comprise a fork having two prongs (224, 225) provided on one of the elements (220) to receive the other of said two elements (520).

4. An electrical switch according to any one of claims 1 to 3, characterized by the fact that the means providing a driving connection between the intermediate drive means (500) and the slide (400) comprise a fork having two prongs (460, 462) provided on one of said elements (400) to receive the other of said two elements (530).

5. An electrical switch according to any one of claims 1 to 4, characterized by the fact that the secondary axis (502) is inclined relative to the main axis (202).

6. An electrical switch according to any one of claims 1 to 5, characterized by the fact that the extension (220) of the handle is coaxial with the main body (210) thereof.

7. An electrical switch according to any one of claims 1 to 5, characterized by the fact that the extension (220) of the handle is not coaxial with the main body (210) thereof.

8. An electrical switch according to any one of claims 1 to 7, characterized by the fact that the handle (220) is carried to pivot about the main axis (202) on equipment (300) that is itself carried on the housing (100) to pivot about an axis (302) orthogonal to the main axis (202).

9. An electrical switch according to any one of claims 1 to 8, characterized by the fact that the handle (200) receives a rod (600) free to rotate about an axis (212) orthogonal to the main axis (202).

10. An electrical switch according to any one of claims 1 to 9, characterized by the fact that the handle (200) is indexed in its rotation about the main axis (202).

11. An electrical switch according to any one of claims 1 to 10, characterized by the fact that the slide (400) is indexed in its displacement in translation.

12. An electrical switch according to any one of claims 1 to 11, characterized by the fact that the slide (400) is guided in a chamber (160) formed in the housing (100).

13. An electrical switch according to any one of claims 1 to 12, characterized by the fact that the slide (400) is provided with resilient fingers (412, 422) urged against an indexing surface provided on the housing (100).

14. An electrical switch according to any one of claims 1 to 13, characterized by the fact that the slide (400) comprises two resilient arms (410, 420) molded therewith and urged by a spring (430) towards an indexing surface (163), and two rigid arms (440, 450) limiting displacement of the resilient arms (410, 420).

15. An electrical switch according to any one of claims 1 to 14, characterized by the fact that the housing (100) includes a generally plane plate (110) carrying the various electrical contacts.

16. An electrical switch according to any one of claims 1 to 15, characterized by the fact that the housing (100) includes a generally plane plate (110) molded onto the electrical contact blades (120).

17. An electrical switch according to any one of claims 1 to 16, characterized by the fact that the intermediate drive means (500) are formed in two separate parts and that a resilient element (552) is interposed between them.

18. An electrical switch according to claim 17, characterized by the fact that a sleeve (540) is also provided, guided to rotate on the shaft (501) and carrying said arm (530) suitable for co-operating with the slide (400).

19. An electrical switch according to claim 17 or 18, characterized by the fact that it includes means (552, 503) defining an indexed link between the two parts of the intermediate drive means (500).

20. An electrical switch according to claim 19, characterized by the fact that the means defining an indexed link between the two parts of the intermediate drive means (500) comprise firstly at least one concave indexing dihedral angle (503) having two main faces (5030, 5031) symmetrical about a plane containing the secondary axis (502) and defined by two flanks (5032, 5033) that are radial relative to the secondary axis (502) and secondly by at least one finger (550) which rests on the concave indexing dihedral angle (503) between the flanks thereof.

21. An electrical switch according to claim 19 or 20, characterized by the fact the means defining an indexed link between the two parts composing the intermediate drive means exert opposing force on one of them that is less than the opposing force exerted on the slide.

22. An electrical switch according to claim 2, characterized by the fact that the shaft (501) includes a torsion bar between the point at which the arm (520) co-operating with the extension (220) of the handle (200) is anchored thereto and the point at which the arm (530) co-operating with the slide (400) is anchored thereto.
